# EUROPEAN PATENT SPECIFICATION

(11) **EP 1 878 647 B1**
(45) Date of publication and mention of the grant of the patent: **21.10.2009**
(21) Application number: 07252611.4
(22) Date of filing: 27.06.2007
(51) Int. Cl.: B62K 25/08, F16F 9/32

(54) **Hydraulic shock absorber**
Hydraulischer Stoßdämpfer
Absorbeur de choc hydraulique

(30) Priority: 13.07.2006 JP 2006193323
(43) Date of publication of application: 16.01.2008
(73) Proprietor: Yamaha Hatsudoki Kabushiki Kaisha, Iwata-shi, Shizuoka-ken 438-8501 (JP)
(72) Inventor: Kawamura, Tsunehisa, Shizuoka-ken 438-8501 (JP)
(74) Representative: Lamb, Martin John Carstairs

(56) References cited:
- WO-A-98/24682
- GB-A- 838 873
- US-A- 6 105 945

## Description

### FIELD OF THE INVENTION

This invention relates to a hydraulic shock absorber with an outer tube and an inner tube slidably mounted within the outer and having a damping force generating function, and also to a motorcycle provided with the hydraulic shock absorber.

### BACKGROUND TO THE INVENTION

Traditionally, a motorcycle has a pair of front forks having an inner tube and an outer tube for supporting a front wheel. Such pair of front forks have a function of steering the front wheel, and at the same time they have a function of generating a damping force for absorbing vibrations and the gaps formed between the road surface and the front wheel.

Normally, a damping force generating function is attained by a spiral or coil spring interposed between the inner tube and the outer tube and for generating an urging force therebetween permitting relative sliding motion of the inner and outer tubes. The magnitude of such damping force is adjustable according to the running speed of the motorcycle and the roughness of the road surface.

Such a prior art arrangement is disclosed in JP-U-2511984. In this reference a cylinder with a built-in piston and containing the hydraulic fluid for damping is provided within the inner tube at the position closer to the wheel (in the lower part). An oil storage chamber which contains the lubricating oil is provided on the outside of the cylinder, and a sub-tank communicating with the oil storage chamber is provided in the vicinity of the lower part of the inner tube. It is intended to obtain the damping function corresponding to the sliding speed of the piston by means of such features.

The technique described in JP-U-2511984 uses a structure in which the lubricating oil in the oil storage chamber and the oil chamber within the cylinder are in mutual fluid communication. Thus, deteriorated lubricating oil will be mixed with clean hydraulic fluid for damping. Namely, since the lubricating oil generally lubricates the sliding part, etc. tiny metallic powders are mixed in the lubricating oil to make it deteriorated, and mixture of such deteriorated lubricating oil with the hydraulic fluid for damping makes it difficult to attain high-precision damping control.

One of the possible measures for eliminating such a problem is a structure in which the lubricating oil in the oil storage chamber and the hydraulic fluid for damping are sealed by a sealing member to prevent them mixing. In such structure, however, either lubricating oil or hydraulic fluid for damping may spill into the other section containing another hydraulic fluid due to the support rod movement corresponding with the sliding motion of the piston. This is because it is currently considered that no oil seal can positively seal a hydraulic fluid from another hydraulic fluid (sealing one liquid from another liquid).

In addition, if one of the hydraulic fluids spills and mixes with the other hydraulic fluid and the spilt hydraulic fluid cannot be recovered into the original hydraulic fluid section, then it will result in a decreased amount or volume of oil for use as one hydraulic fluid, and an increased amount or volume of oil for use as the other hydraulic fluid. This is why it has been difficult to perform stable and high-precision damping force control by such a described structure.

WO98/2468 describes a shock absorbing fork for a bicycle having telescoping struts. Each strut has an upper tube coupled to a steering tube and each upper tube is received in a lower tube coupled to an axle for supporting a wheel. Each lower tube defined a variable volume chamber, reciprocal movement between the upper and lower tubes changing the volume of the chamber. This document discloses a hydraulic shock absorber which comprises a cylinder chamber containing hydraulic fluid for generating a damping force and a lubricating oil chamber.

The object of the present invention is to provide a hydraulic shock absorber in which the hydraulic fluid for lubrication is separated from the hydraulic fluid for damping to prevent them from mixing, and to provide a motorcycle equipped with such hydraulic shock absorber.

### SUMMARY OF THE INVENTION

According to a first aspect of the present invention, there is provided a hydraulic shock absorber comprising:
a cylinder chamber containing hydraulic fluid for generating a damping force;
a lubricating oil chamber; and
an airtight gas chamber formed between the cylinder chamber and the lubricating oil chamber.

The hydraulic shock absorber may further comprise an outer tube and an inner tube at least partially slidably mounted within the outer tube, wherein the cylinder chamber may be formed in at least one of the outer tube and the inner tube and the lubricating oil chamber may be formed in at least one of the outer tube and the inner tube.

The cylinder chamber may be formed in both the outer tube and the inner tube and the lubricating oil chamber may be formed in both the outer tube and the inner tube.

The lubricating chamber may be provided on the outside of the cylinder chamber.

The hydraulic shock absorber may further comprise a rod member secured to at least one of the outer and inner tubes.

The hydraulic shock absorber may further comprise a piston slidably mounted within the cylinder chamber and secured to the rod member.

The gas chamber may be formed on top of the cylinder chamber.

The hydraulic shock absorber may further comprise a guide cylindrical member, wherein the gas chamber may be formed between the guide cylindrical member and the rod member.

The hydraulic shock absorber may further comprise a lid member for covering the upper end opening of the cylinder chamber, wherein the guide cylindrical member may be mounted to the lid member and extend coaxially with the rod member, and the gas chamber may be formed between the inner circumference of the guide cylindrical member and the rod member.

The hydraulic shock absorber may further comprise a sealing member disposed between the lid member and the rod member. The sealing member may comprise an oil seal.

The hydraulic shock absorber may further comprise a seal holding member disposed between an extended end of the guide cylindrical member and the rod member. The seal holding member may comprise an oil ring. The seal holding member may be disposed above the level of hydraulic fluid within the cylinder chamber.

The hydraulic shock absorber may further comprise a sub-tank including:
a main body case to form a sub-oil chamber communicating with the cylinder chamber; and
a free piston fitted into the main body case.

According to an embodiment of the present invention, there is provided a hydraulic shock absorber according to claim 16.

According to a second aspect of the present invention, there is provided a motorcycle provided with the hydraulic shock absorber according to the first or second aspect.

Features defined above with respect to the first aspect may also be applied to the hydraulic shock absorber according to the second aspect.

According to the present invention, the airtight air chamber is formed between the cylinder chamber and the lubricating oil chamber, and the hydraulic fluid in the lubricating oil chamber does not enter the cylinder chamber, eliminating an increase or decrease of the hydraulic fluid, allowing it to be kept clean. Thus, high-performance damping force function can be exerted for an extended period of time.

### BRIEF DESCRIPTION OF THE DRAWINGS

These and other aspects of the present invention will now be described, by way of example only, with reference to the accompanying drawings, in which:
FIG. 1 is a side view showing a schematic overall structure of a motorcycle incorporating the present invention;
FIG. 2 is a partial enlarged view of a portion of the motorcycle shown in FIG. 1;
FIG. 3 is a cross sectional view showing the overall structure of a front fork (in a compressed state) of the motorcycle of FIG. 1;
FIG. 4 is a partial enlarged view of a lower portion of the front fork of FIG. 3;
FIG. 5 is a partial enlarged view of an upper portion of the front fork of FIG. 3; and
FIG. 6 is a cross sectional view showing the overall structure of the front fork (in an expanded state).

### DETAILED DESCRIPTION OF THE DRAWINGS

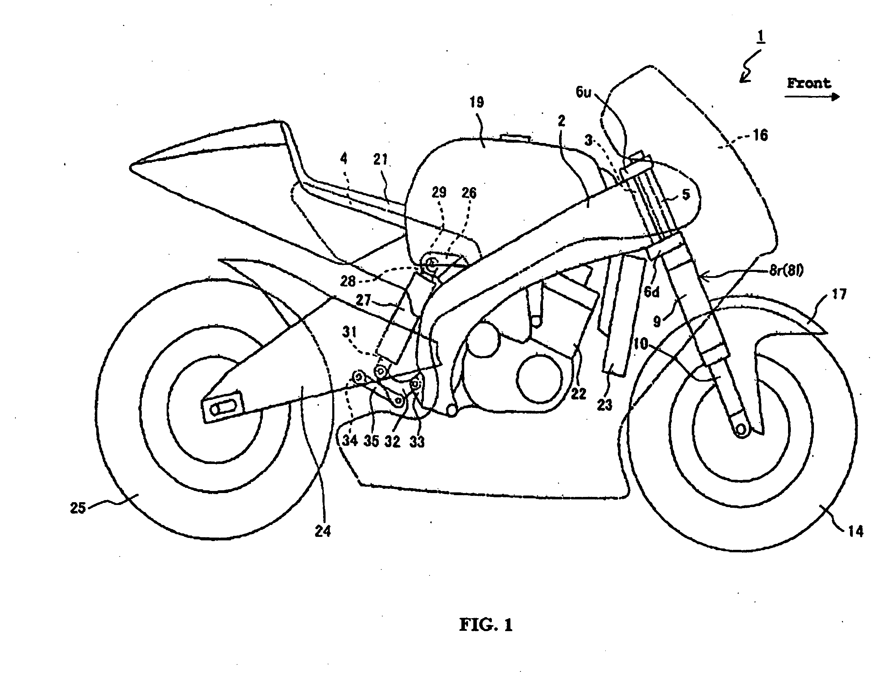

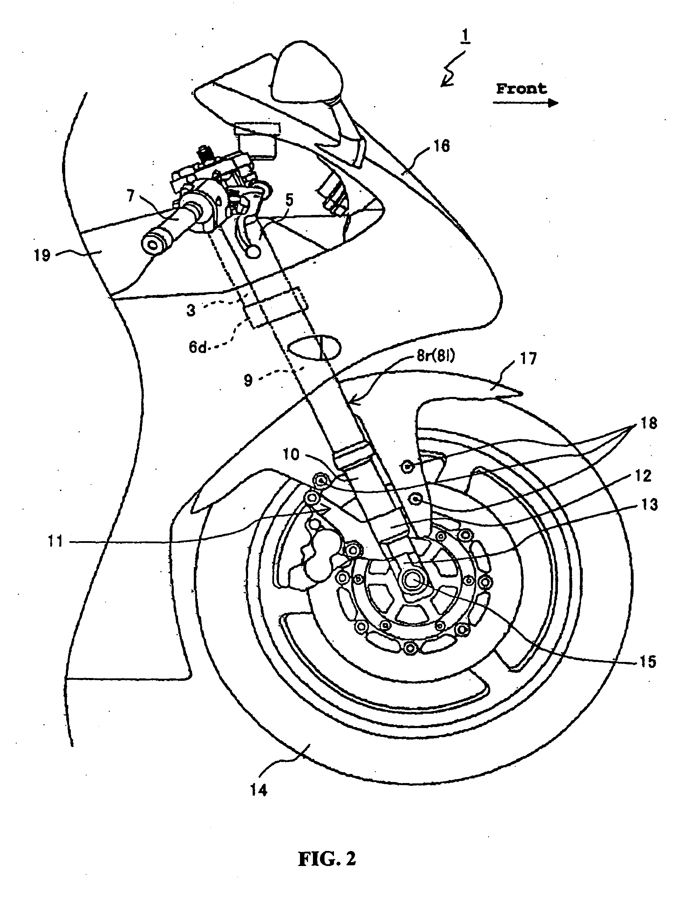

Reference is first made to FIGs. 1 and 2 of the drawings. FIG. 1 is a side view showing the schematic overall structure of a motorcycle. FIG. 2 is a side view showing the front part structure of the motorcycle in FIG. 1 in detail.

Note that the traveling direction of the motorcycle is indicated in FIGs. 1 and 2 by the text "Front" and the adjacent arrow.

As shown in FIGs. 1 and 2, the motorcycle 1 is provided with a main frame 2, a head pipe 3 fixed to the front part of the main frame 2, and a seat rail 4 coupled to the rear part of the main frame 2.

The main frame 2, the head pipe 3, and the seat rail 4 compose a body frame. Further, a steering shaft 5 is rotationally fitted into the head pipe 3.

Front fork support arms 6u and 6d are mounted to the upper and lower ends of the steering shaft 5 and project to both sides thereof. The front fork support arms 6u and 6d, along with the steering shaft 5, can rotate freely relative to the head pipe 3.

Also, the steering shaft 5 can rotate freely relative to the head pipe 3, and at the same time, the vertical position of the steering shaft 5 is fixed by the upper and lower front fork support arms 6 (6u, 6d) within the head pipe 3.

In addition, a handlebar (which is not shown in FIG. 1, and cannot see in FIG. 2 as it is hidden behind the various members attached around the handlebar) is fixedly mounted to the upper front fork support arm 6u, and a grip 7 is fitted externally to each end of the handlebar.

Also, an outer tube 9 for a pair of left and right front forks 8 (8r, 81) is fixedly supported by the upper and lower front fork support arms 6. Further, the upper part of an inner tube 10 is vertically fitted into and supported by the outer tube 9 in a slidable manner.

The lower part of the inner tube 10 is fixedly held by an inner tube holding part 12 of an axle bracket 11, and the axle bracket 11 holds an axle 15 of a front wheel 14 by means of an axle holding part 13.

In this manner, the front wheel 14 is held by the outer tube 9 via the axle holding part 13, the axle bracket 11, and the inner tube 10, and is further connected to the handlebar via the front fork support arms 6u and 6d to allow the steering operation.

Also, a windshield 16 made of transparent resin and covering the forward part of the head pipe 3 is provided in front of the head pipe 3. Further, a front fender 17 is provided below the windshield 16 to cover the area above the front wheel 14.

The front fender 17 is fixed to the axle bracket 11 by means of fixing parts 18. In this way, the front fender 17, combined with the front wheel 14 and the inner tube 10, makes vertical jumping or vibration movement.

In addition, a fuel tank 19 is provided on the main frame 2 behind the head pipe 3. A seat 21 is disposed behind the fuel tank 19. An engine 22 is mounted below the main frame 2. An air cleaner 23 for cleaning the air supplied to the engine 22 is provided in the forward of the engine 22.

In the rear of the main frame 2, a rear arm 24 is disposed with its front part being supported by a pivot shaft (not shown)on the main frame, and the rear part being in a swingable condition. A rear wheel 25 is rotatably supported at the rear end of the rear arm 24.

In addition, a support part 26 is provided in the upper rear part of the main frame 2, and an upper attachment part 28 of a rear suspension 27 is engaged with the support part 26 via a shaft member 29. Further, a lower attachment part 31 of the rear suspension 27 is engaged with one end of a hook-shaped swinging member 32.

The other end of the swinging member 32 is engaged with a support part 33 formed in the lower part at the rear end of the main frame 2, and a connecting member 35 is interposed between the center part of the hook-shaped swinging member 32 and the support part 34 of the rear arm 24.

With this structure, the swinging member 32 generates vertical swinging motion around the support part 33 of the main frame 2 at the engaging part with the lower attachment part 31 of the suspension 27, corresponding to the vertical swinging motion of the rear arm 24 in accordance with the vertical jumping or vibration movement of the rear wheel 25. Thus, the expansion and contraction of the suspension 27 exerts damping action against the vertical jumping movement of the rear wheel 25.

The suspension exerting the damping force generating effect against the vertical jumping movement of the front wheel 14 is disposed between each outer tube 9 and the inner tube 10 of a pair of left and right front forks 8 (8r, 81).

Since the suspension is provided on each of a pair of front forks 8 (8r, 81) provided on both sides in relation to the vehicle's running direction, the damping force generating effect acting on the front fork will not be concentrated to one side of the front fork. This allows well-balanced damping function to be exerted on the front wheel 14.

The damping force adjustment is generated by providing a plural number of plate valves, which are not specifically shown in the figure, at the inlet and outlet of the oil passage through which the oil flows in and out of the oil chamber according to the expansion and contraction of the front fork, and by increasing or decreasing the oil flow rate by opening or closing these plate valves.

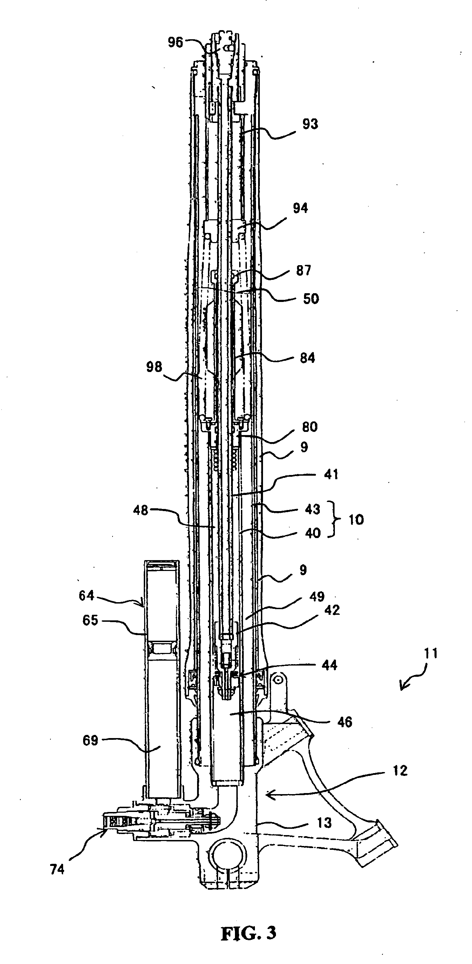

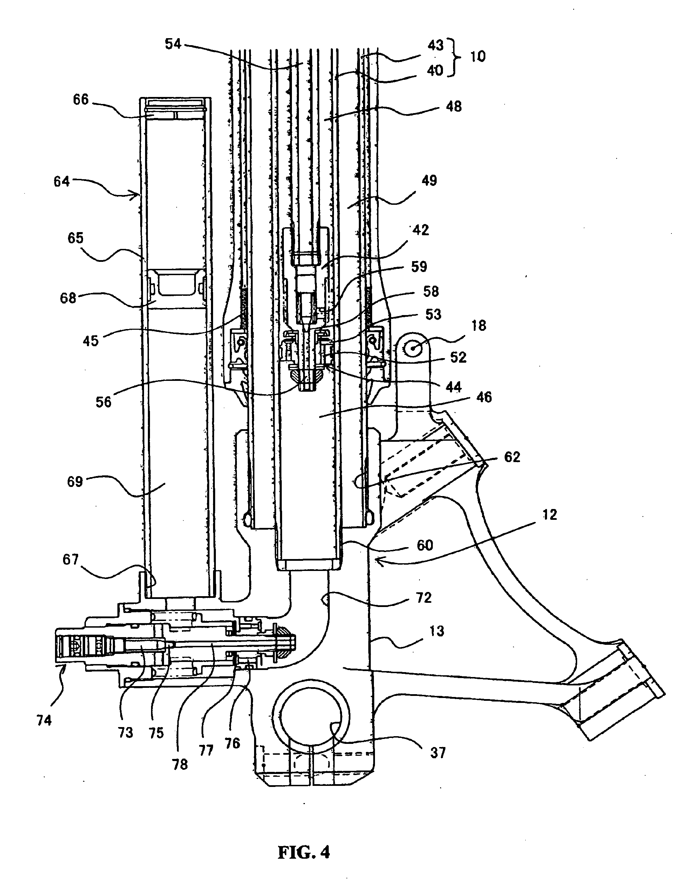

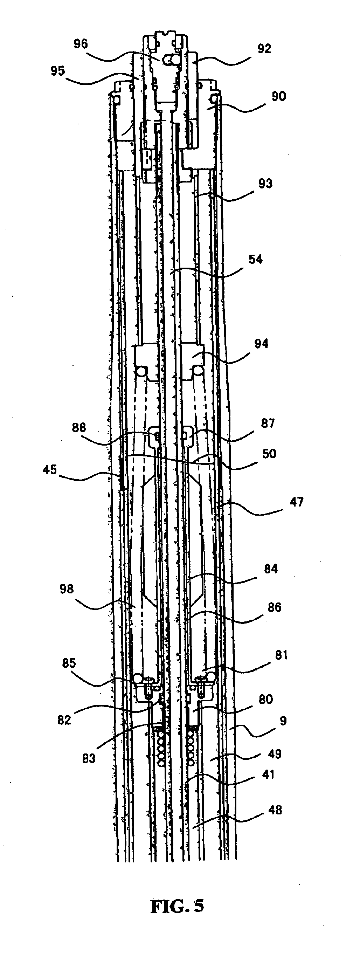

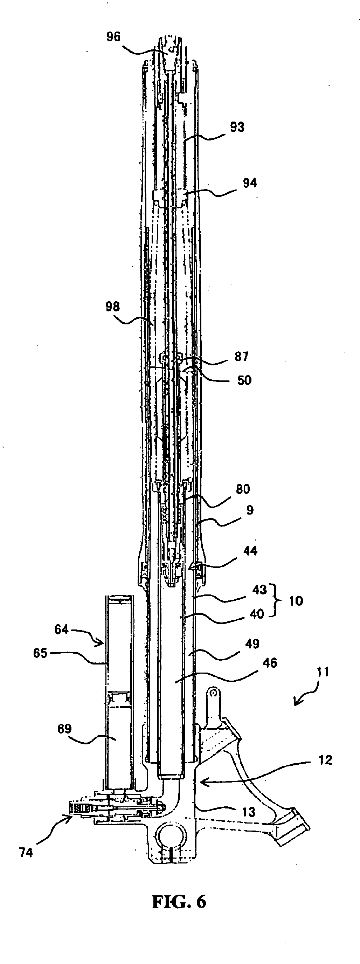

FIG. 3 is a cross-sectional view showing the condition in which the outer tube 9 is compressed and contracted relative to the inner tube 10, and partially enlarged views of FIG. 3 are shown in FIGs. 4 and 5. FIG. 6 is a cross-sectional view showing the condition in which the outer tube 9 is expanded relative to the inner tube 10.

As shown in FIGs. 3 and 4, the axle bracket 11 has the aforementioned inner tube holding part 12, the axle holding part 13, and the fixing parts 18, while the axle holding part 13 has an axle bearing 37 for holding the axle 15 of the front wheel 14.

The front fork 8 has the inner tube 10 and the outer tube 9, with the inner tube 10 being mutually fitted into the outer tube 9 from below for free sliding motion. Bushes 45 are installed for the sliding motion at the upper and lower parts on the inner circumference of the outer tube 9.

The inner tube 10 is formed as a double tube. An inner cylinder wall 40 is formed in a cylindrical shape. An outer fitting wall 43 is formed in a cylindrical shape on the outside of the inner cylinder wall 40. The length of the inner cylinder wall 40 is shorter than that of the outer fitting wall 43 (generally about half the length in the case of the present embodiment).

A cylinder chamber, composed of a lower oil chamber 46 and an upper oil chamber 48, is formed on the inside of the inner cylinder wall 40. The cylinder chamber 46, 48 contains hydraulic fluid (oil) for generating the damping force. Also, a lubricating oil chamber 49 is formed between the inner cylinder wall 40 and the outer fitting wall 43. The oil within the lubricating oil chamber 49 is supplied to the inner circumference of the outer tube 9 through an oil hole 47 (see FIG. 5) formed in the upper part of the outer fitting wall 43.

The lubrication between the outer fitting wall 43 and the outer tube 9 is provided by the oil. In addition, the oil within the lubricating oil chamber 49 also serves as a lubricant for a damping spring 98 that will be described later.

The lower end of the outer fitting wall 43 of the inner tube 10 is fitted and held in a mounting hole 62 drilled in the inner tube holding part 12. Likewise, the lower end of the cylinder wall 40 is fitted and held in a small diameter mounting hole 60 formed in the bottom part of the mounting hole 62.

A hollow rod 41 serving as a rod member is integrally mounted to the outer tube 9 at its upper end. A holder 42 is mounted at the lower end of the hollow rod 41 and supports a piston 44 which is in sliding contact with the inner circumference of the cylinder wall 40 for free vertical sliding motion.

The cylinder chamber within the inner cylinder wall 40 is divided into the lower oil chamber 46 and the upper oil chamber 48 by the piston 44. An expansion-side oil passage 52 and an expansion-side valve 53 are formed in the piston 44. Also, an operating rod 54 is inserted through the hollow rod 41 for free reciprocating movement, and at the lower end of the operating rod 54, a needle 58 is mounted for controlling the opening of a bypass oil passage 56 formed in the holder 42. In addition, an oil hole 59 is formed in the holder 42 to communicate with the bypass oil passage 56. In this way, the fine tuning of the damping force can be attained as the opening of the bypass oil passage 56 is adjusted by moving the needle 58 in the reciprocating manner.

In addition, a sub-tank 64 is mounted in the vicinity of the lower part of the inner tube 10. The sub tank 64 has a cylindrical main body case 65 having an opening at its both ends. The lower end of the main body case 65 is fitted in and held by the inner circumference of a mounting hole 67 which is formed in the inner tube holding part 12.

A sub-oil chamber 69 is formed within the main body case 65, and the upper end opening of the sub-oil chamber 69 is fixed with a cap 66. In addition, a free piston 68 is fitted into the main body case 65 for free sliding motion.

The space in the back of (in the upper part relative to) the free piston 68 is filled with highly pressurized nitrogen gas (N₂ gas). This is because when the negative pressure exists in the sub-oil chamber 69 or in the cylinder chamber (46, 48) for instance, the dissolved air in the oil will turn into bubbles, and it becomes difficult to attain the high precision damping control by utilizing the oil as the control medium. More specifically, as the pressure within the cylinder chamber (46, 48) changes, the free piston 68 moves to alter the set pressure regarding the oil chamber in the sub-tank 64.

A communication passage 72 is formed in the inner tube holding part 12 for providing a fluid communicating path between the lower oil chamber 46 serving as the cylinder chamber and the sub-oil chamber 69 in the sub-tank 64. A piston 74 is provided in a fixed condition in the communication passage 72.

A compression-side oil passage 76 and a compression-side valve 77 are mounted to the piston 74. In addition, an adjusting rod 73 is provided in the piston 74 for free reciprocating movement, and at the end of the adjusting rod 73 a needle 75 is provided for controlling the opening of a bypass oil passage 78.

The fine tuning regarding the opening of the bypass oil passage 78 can be attained by adjusting and moving the needle 75. In this way, the hydraulic fluid contained in the sub-tank 64 and the hydraulic fluid contained in the lower oil chamber 46 for generating the damping force are communicated via the piston 74.

According to the descriptions above, a screw lid 80 is screwed in to the inner cylinder wall 40 in the present embodiment so as to cover the upper end opening of the aforementioned cylinder chamber (46, 48), as shown in FIG. 5. A through hole 83 penetrating the hollow rod 41 is formed in the screw lid 80. In addition, an oil seal 82 is installed on the inner circumference of the screw lid 80.

Firm sealing of the oil contained in the upper oil chamber 48 for generating the damping force, and the oil contained in the lubricating oil chamber 49 is attained by the function of the oil seal 82 and an air chamber 86 which will be described later.

Also a guide cylindrical member 84, extending upward coaxially with the cylinder chamber (46,48), is fixed to the screw lid 80. The guide cylindrical member 84 has a flange part 85 at the lower end, and is fastened to the screw lid 80 via the flange part 85 by means of bolts 81. Also, the guide cylindrical member 84 has a seal holding part 87 at the upper end. An oil ring 88 is installed on the inner circumference of the seal holding part 87.

In this way, the airtight air chamber 86 is formed above the upper oil chamber 48 in the gap to the lubricating oil chamber 49, in other words, in the gap between the inner circumference of the guide cylindrical member 84 and the external circumference of the hollow rod 41. The air chamber 86 is formed to have the airtight condition by means of the oil seal 82 provided in the lower part, and the oil ring 88 provided in the upper part.

For reference, there is no specific restriction for the material of the guide cylindrical member 84, so far as it will not melt or otherwise be damaged by the oil. For instance, aluminum die-casting or synthetic resin may be used for the purpose of attaining the light weight and the cost reduction.

By forming the air chamber 86 in this way, the amount of oil equivalent to the total volume of the guide cylindrical member 84 and the air chamber 86 can be reduced. The oil ring 88 is mainly intended to prevent the entry of oil contained in the lubricating oil chamber 86 into the air chamber 86, when the vehicle body is placed horizontally in the course of transportation. For this purpose, the oil ring 88 installed in the seal holding part 87 is located above an oil level 50 within the lubricating oil chamber 49, according to the present embodiment.

By using such a structure as described herein, the oil in the upper oil chamber 48 is separated from the air in the air chamber 86 by means of the oil seal 82, which allows the use of standard oil seals as the sealing member. Further, a lid 90 and a holding member 92 are fitted into the upper end of the outer tube 9. The holding member 92 has a downwardly extending pipe section 93, and a spring adjuster 94 is fixed to the lower end of the pipe section 93. Also, a bush 95 is screwed in to the inner face of the holding member 92. A rod-fixing member 96, to which the operating rod 54 is mounted, is screwed in to the inner face of the bush 95.

Thus, the operating rod 54 moves in the reciprocating manner by the turning operation of the rod-fixing member 96. Further, the movement of the operating rod 54 in the reciprocating manner results in the movement of the needle 58. In addition, a damping spring (compression) 98 is installed between the flange part 85 of the guide cylindrical member 84 and the spring adjuster 94. The damping spring 98 gives the damping force when the relative movement between the inner tube 10 and the outer tube 9 takes place.

Note that the front fork 8 with the sub-tank 64 was described in the present embodiment, but the present invention is not limited to this configuration and is also applicable to the front fork 8 without the sub-tank 64.

The operation of the shock absorber according to the present embodiment will now be described. While the motorcycle 1 is running, and when it runs on a road with a rough surface, for instance, the inner tube 10 and the outer tube 9 are adapted to be compressed as the motorcycle runs on a convex surface of the road for strongly exerting the damping force of the oil, and they are adapted to be expanded as the motorcycle runs on the concave surface of the road for weakly exerting the damping force of the oil.

In other words, as the inner tube 10 and the outer tube 9 are compressed, a compressing force is exerted between the inner tube 10 and the outer tube 9, as shown in FIGs. 3 through 5, resulting in the piston 44 attempting to move down in the cylinder chamber (46, 48). In such cases, the compression-side valve 77 opens on the piston 74 at the sub-tank 64, resulting in the oil in the lower oil chamber 46 moving through the compression-side oil passage 76 into the sub-oil chamber 69.

The damping force is exerted between the inner tube 10 and the outer tube 9 by the oil passing through the compression-side oil passage 76 that is the narrow oil passage. In addition, the damping force is adjusted to the openings of the needle 58 and the bypass oil passage 56 for the piston 44, as well as the needle 75 and the bypass oil passage 78 for the piston 74.

As the inner tube 10 and the outer tube 9 are expanded, a tensile or expansion force is exerted between the inner tube 10 and the outer tube 9, as shown in FIG. 6, resulting in the piston 44 attempting to move up in the cylinder chamber (46, 48). In such cases, the oil in the upper oil chamber 48 of the cylinder chamber (46, 48) opens the expansion-side valve 53 through the expansion-side oil passage 52 to move into the lower oil chamber 46.

Again, the damping force is exerted between the inner tube 10 and the outer tube 9 by the oil passing through the expansion-side oil passage 52 that is the narrow oil passage. In addition, the damping force is adjusted to the openings of the needle 58 and the bypass oil passage 56 for the piston 44, as well as the needle 75 and the bypass oil passage 78 for the piston 74.

Note that the needle 58 and the bypass oil passage 56 for the piston 44, as well as the needle 75 and the bypass oil passage 78 for the piston 74 are used as the flow passage for fine tuning in the preceding description, however, they may be used as the main flow passage to the contrary. If this is the case, the compression-side oil passage 76 for the sub-tank 64, and the expansion-side oil passage 52 for the piston 44 are used as the flow passage for fine tuning.

According to the descriptions above, the oil in the upper oil chamber 48 for generating the damping force is separated from the air in the air chamber 86 by means of the oil seal 82. As the piston 44 slides up and down in the cylinder chamber (46, 48) according to the expansion and contraction of the inner tube 10 and the outer tube 9, the hollow rod 41 moves integrally with the piston 44.

The oil adhered to the external circumference of the hollow rod 41 moves into the air chamber 86 as if it leaks out through the small gap of the oil seal 82 as a result of the upward movement of the piston 44 in the expanding operation, for instance. The oil that has moved this way, however, is recovered by moving from the air chamber 86 into the upper oil chamber 48 as a result of the downward movement of the piston 44 in the next contracting operation.

Thus, the oil that leaked from the upper oil chamber 48 into the air chamber 86 is totally recovered by the same amount, without any increase or decrease for the amount of oil contained in the upper oil chamber 48. In this way, the amount and cleanliness of the clean oil contained in the upper oil chamber 48 and the lower oil chamber 46 for generating the damping force are kept generally invariable. Thus, there is no chance for the clean oil in the upper oil chamber 48 and the lower oil chamber 46 to get mixed with the contaminated oil in the lubricating oil chamber 49.

According to the present embodiment, the amount of oil does not increase or decrease, and is kept clean, because the oil in the lubricating oil chamber 49 does not enter the cylinder chamber (46, 48), enabling it to exert high-performance damping force function for an extended period of time. In addition, formation of the air chamber 86 on top of the cylinder chamber (46, 48) allows the reduction of the amount of lubricating oil filled in the lubricating oil chamber 49, by the amount equivalent to the volumes including those of the guide cylindrical member 84 and the air chamber 86. This is useful for the weight reduction of the front fork 8.

In addition, since the guide cylindrical member 84 serves as a guide for the damping spring 98, the buckling of the damping spring 98 is prevented, which is useful for the improvement of spring characteristics and the alleviation of friction. Further, since the air chamber 86 is furnished on top of the upper oil chamber 48, a standard oil seal 82 can be used to provide the seal for separating the oil in the upper oil chamber 48 from the air in the air chamber 86.

On the contrary if the air chamber 86 is not furnished, a sealing member suitable for liquid - liquid separation will be required for separating the oil in the upper oil chamber 48 and the oil in the lubricating oil chamber 49.

### Description of Reference Numerals

- 1:: motorcycle
- 8:: front fork
- 9:: outer tube
- 10:: inner tube
- 11:: axle bracket
- 12:: inner tube holding part
- 40:: cylinder wall
- 41:: hollow rod (rod member)
- 42:: holder
- 43:: outer fitting wall
- 44:: piston
- 45:: bush
- 46:: lower oil chamber (cylinder chamber)
- 47:: oil hole
- 48:: upper oil chamber (cylinder chamber)
- 49:: lubricating oil chamber
- 50:: oil level
- 52:: expansion-side oil passage
- 53:: expansion-side valve
- 54:: operating rod
- 56:: bypass oil passage
- 58:: needle
- 59:: oil hole
- 60:: mounting hole
- 62:: mounting hole
- 64:: sub-tank
- 65:: main body case
- 66:: cap
- 67:: mounting hole
- 68:: free piston
- 69:: sub-oil chamber
- 72:: communication passage
- 73:: adjusting rod
- 74:: piston
- 75:: needle
- 76:: compression-side oil passage
- 77:: compression-side valve
- 78:: bypass oil passage
- 80:: screw lid (lid member)
- 81:: bolt
- 82:: oil seal (sealing member)
- 83:: through hole
- 84:: guide cylindrical member
- 85:: flange part
- 86:: air chamber (gas chamber)
- 87: seal holding part
- 88:: oil ring (seal holding member)
- 90:: lid
- 92:: holding member
- 93:: pipe section
- 94:: spring adjuster
- 95:: bush
- 96:: rod-fixing member

## Claims

1. A hydraulic shock absorber comprising:
a cylinder chamber (46, 48) containing hydraulic fluid for generating a damping force;
a lubricating oil chamber (49); and
an airtight gas chamber (86) formed between the cylinder chamber (46, 48) and the lubricating oil chamber (49).

2. The hydraulic shock absorber according to Claim 1, further comprising an outer tube (9) and an inner tube (10) at least partially slidably mounted within the outer tube (9), wherein the cylinder chamber (46, 48) is formed in at least one of the outer tube (9) and the inner tube (10) and the lubricating oil chamber (49) is formed in at least one of the outer tube (9) and the inner tube (10).

3. The hydraulic shock absorber according to Claim 2, wherein the cylinder chamber (46, 48) is formed in both the outer tube (9) and the inner tube (10) and the lubricating oil chamber (49) is formed in both the outer tube (9) and the inner tube (10).

4. The hydraulic shock absorber according to claim 1, 2 or 3, wherein the lubricating chamber (49) is provided on the outside of the cylinder chamber (46, 48).

5. The hydraulic shock absorber according to any preceding claim, further comprising a rod member (41) secured to at least one of the outer and inner tubes (9, 10).

6. The hydraulic shock absorber according to claim 5, further comprising a piston (44) slidably mounted within the cylinder chamber (46, 48) and secured to the rod member (41).

7. The hydraulic shock absorber according to any preceding Claim, wherein the gas chamber (86) is formed on top of the cylinder chamber (46, 48).

8. The hydraulic shock absorber according to Claim 5, 6 or 7, further comprising a guide cylindrical member (84), wherein the gas chamber (86) is formed between the guide cylindrical member (84) and the rod member (41).

9. The hydraulic shock absorber according to Claim 8, further comprising a lid member (80) for covering the upper end opening of the cylinder chamber (46, 48), wherein the guide cylindrical member (84) is mounted to the lid member (80) and extends coaxially with the rod member (41), and the gas chamber (86) is formed between the inner circumference of the guide cylindrical member (84) and the rod member (41).

10. The hydraulic shock absorber according to Claim 9, further comprising a sealing member (82) disposed between the lid member (80) and the rod member (41).

11. The hydraulic shock absorber according to Claim 9, wherein the sealing member (82) comprises an oil seal.

12. The hydraulic shock absorber according to any one of Claims 8 to 11, further comprising a seal holding member (88) disposed between an extended end of the guide cylindrical member (84) and the rod member (41).

13. The hydraulic shock absorber according to Claim 12, wherein the seal holding member (88) comprises an oil ring.

14. The hydraulic shock absorber according to Claim 12 or 13, wherein the seal holding member (88) is disposed above the level of hydraulic fluid within the cylinder chamber (46, 48).

15. The hydraulic shock absorber according to any preceding Claim, further comprising a sub-tank (64) including:
a main body case (65) to form a sub-oil chamber (69) communicating with the cylinder chamber (46, 48; and
a free piston (68) fitted into the main body case (65).

16. The hydraulic shock absorber according to any preceding claim, further comprising:
an inner tube (10);
an outer tube (9) fittedly receiving therein the inner tube (10) for free sliding motion;
a piston (44) accommodated in the cylinder chamber (46,48) for free sliding motion; and
a rod member (41) with one end being attached to the outer tube (9) and the other end being connected to the piston (44),
wherein the cylinder chamber (46,48) is formed in the inner tube (10) and the outer tube (9) and the lubricating oil chamber (49) is also formed in the inner tube (10) and the outer tube (9), and on the outside of the cylinder chamber (46,48).

17. A motorcycle (1) provided with the hydraulic shock absorber according to any preceding Claim.

## Patentansprüche

1. Hydraulischer Stoßdämpfer, der aufweist:
eine Zylinderkammer (46, 48), die Hydraulikfluid für das Erzeugen einer Dämpfungskraft enthält;
eine Schmierölkammer (49); und
eine luftdichte Gaskammer (86), die zwischen der Zylinderkammer (46, 48) und der Schmierölkammer (49) gebildet wird.

2. Hydraulischer Stoßdämpfer nach Anspruch 1, der außerdem aufweist: ein Außenrohr (9); und ein Innenrohr (10), das mindestens teilweise verschiebbar innerhalb des Außenrohres (9) montiert ist, wobei die Zylinderkammer (46, 48) in mindestens einem von Außenrohr (9) und Innenrohr (10) gebildet wird, und
wobei die Schmierölkammer (49) in mindestens einem von Außenrohr (9) und Innenrohr (10) gebildet wird.

3. Hydraulischer Stoßdämpfer nach Anspruch 2, bei dem die Zylinderkammer (46, 48) in sowohl dem Außenrohr (9) als auch dem Innenrohr (10) gebildet wird, und bei dem die Schmierölkammer (49) in sowohl dem Außenrohr (9) als auch dem Innenrohr (10) gebildet wird.

4. Hydraulischer Stoßdämpfer nach Anspruch 1, 2 oder 3, bei dem die Schmierkammer (49) auf der Außenseite der Zylinderkammer (46, 48) vorhanden ist.

5. Hydraulischer Stoßdämpfer nach einem der vorhergehenden Ansprüche, der außerdem ein Stangenelement (41) aufweist, das an mindestens einem von Außenrohr und Innenrohr (9, 10) gesichert ist.

6. Hydraulischer Stoßdämpfer nach Anspruch 5, der außerdem einen Kolben (44) aufweist, der verschiebbar innerhalb der Zylinderkammer (46, 48) montiert und am Stangenelement (41) gesichert ist.

7. Hydraulischer Stoßdämpfer nach einem der vorhergehenden Ansprüche, bei dem die Gaskammer (86) oben auf der Zylinderkammer (46, 48) gebildet wird.

8. Hydraulischer Stoßdämpfer nach Anspruch 5, 6 oder 7, der außerdem ein zylindrisches Führungselement (84) aufweist, wobei die Gaskammer (86) zwischen dem zylindrischen Führungselement (84) und dem Stangenelement (41) gebildet wird.

9. Hydraulischer Stoßdämpfer nach Anspruch 8, der außerdem ein Deckelelement (80) für das Abdecken der oberen Endöffnung der Zylinderkammer (46, 48) aufweist, wobei das zylindrische Führungselement (84) am Deckelelement (80) montiert ist und sich koaxial mit dem Stangenelement (41) erstreckt, und wobei die Gaskammer (86) zwischen dem Innenumfang des zylindrischen Führungselementes (84) und dem Stangenelement (41) gebildet wird.

10. Hydraulischer Stoßdämpfer nach Anspruch 9, der außerdem ein Dichtungselement (82) aufweist, das zwischen dem Deckelelement (80) und dem Stangenelement (41) angeordnet ist.

11. Hydraulischer Stoßdämpfer nach Anspruch 9, bei dem das Dichtungselement (82) eine Öldichtung aufweist.

12. Hydraulischer Stoßdämpfer nach einem der Ansprüche 8 bis 11, der außerdem ein Dichtungshalteelement (88) aufweist, das zwischen einem verlängerten Ende des zylindrischen Führungselementes (84) und dem Stangenelement (41) angeordnet ist.

13. Hydraulischer Stoßdämpfer nach Anspruch 12, bei dem das Dichtungshalteelement (88) einen Ölring aufweist.

14. Hydraulischer Stoßdämpfer nach Anspruch 12 oder 13, bei dem das Dichtungshalteelement (88) über dem Niveau des Hydraulikfluids innerhalb der Zylinderkammer (46, 48) angeordnet ist.

15. Hydraulischer Stoßdämpfer nach einem der vorhergehenden Ansprüche, der außerdem einen Unterbehälter (64) aufweist, der umfasst:
ein Hauptkörpergehäuse (65), um eine Unterölkammer (69) zu bilden, die mit der Zylinderkammer (46, 48) in Verbindung steht; und
einen Freikolben (68), der in das Hauptkörpergehäuse (65) passt.

16. Hydraulischer Stoßdämpfer nach einem der vorhergehenden Ansprüche, der außerdem aufweist:
ein Innenrohr (10);
ein Außenrohr (9), das darin passend das Innenrohr (10) für eine ungehinderte Gleitbewegung aufnimmt;
einen Kolben (44), der in der Zylinderkammer (46, 48) für eine ungehinderte Gleitbewegung aufgenommen wird; und
ein Stangenelement (41), wobei ein Ende am Außenrohr (9) befestigt und das andere Ende mit dem Kolben (44) verbunden ist,
wobei die Zylinderkammer (46, 48) im Innenrohr (10) und im Außenrohr (9) und die Schmierölkammer (49) ebenfalls im Innenrohr (10) und im Außenrohr (9) und auf der Außenseite der Zylinderkammer (46, 48) gebildet wird.

17. Motorrad (1), das mit dem hydraulischen Stoßdämpfer nach einem der vorhergehenden Ansprüche versehen ist.

## Revendications

1. Amortisseur de choc hydraulique, comprenant :
une chambre de cylindre (46, 48), contenant un fluide hydraulique pour produire une force d'amortissement ;
une chambre à huile de lubrification (49) ; et
une chambre à gaz étanche à l'air (86) formée entre la chambre de cylindre (46, 48) et la chambre à huile de lubrification (49).

2. Amortisseur de choc hydraulique selon la revendication 1, comprenant en outre un tube externe (9) et un tube interne (10), monté au moins partiellement de manière coulissante dans le tube externe (9), la chambre de cylindre (46, 48) étant formée dans au moins un tube, le tube externe (9) ou le tube interne (10), et la chambre à huile de lubrification (49) étant formée dans au moins un tube, le tube externe (9) ou le tube interne (10).

3. Amortisseur de choc hydraulique selon la revendication 2, dans lequel la chambre de cylindre (46, 48) est formée dans le tube externe (9) et dans le tube interne (10), la chambre à huile de lubrification (49) étant formée dans le tube externe (9) et dans le tube interne (10).

4. Amortisseur de choc hydraulique selon les revendications 1, 2 ou 3, dans lequel la chambre à huile de lubrification (49) est agencée sur l'extérieur de la chambre de cylindre (46, 48).

5. Amortisseur de choc hydraulique selon l'une quelconque des revendications précédentes, comprenant en outre un élément de tige (41) fixé sur au moins un tube, le tube externe ou le tube interne (9, 10).

6. Amortisseur de choc hydraulique selon la revendication 5, comprenant en outre un piston (44) monté de manière coulissante dans la chambre de cylindre (46, 48) et fixé sur l'élément de tige (41).

7. Amortisseur de choc hydraulique selon l'une quelconque des revendications précédentes, dans lequel la chambre à gaz (86) est formée en haut de la chambre de cylindre (46, 48).

8. Amortisseur de choc hydraulique selon les revendications 5, 6 ou 7, comprenant en outre un élément de guidage cylindrique (84), la chambre à gaz (86) étant formée entre l'élément de guidage cylindrique (84) et l'élément de tige (41).

9. Amortisseur de choc hydraulique selon la revendication 8, comprenant en outre un élément de couvercle (80) pour recouvrir l'ouverture d'extrémité supérieure de la chambre de cylindre (46, 48), l'élément cylindrique de guidage (84) étant monté sur l'élément de couvercle (80) et s'étendant de manière coaxiale à l'élément de tige (41), la chambre à gaz (86) étant formée entre la circonférence interne de l'élément de guidage cylindrique (84) et l'élément de tige (41).

10. Amortisseur de choc hydraulique selon la revendication 9, comprenant en outre un élément de joint d'étanchéité (82) agencé entre l'élément de couvercle (80) et l'élément de tige (41).

11. Amortisseur de choc hydraulique selon la revendication 9, dans lequel l'élément de joint d'étanchéité (82) comprend un joint étanche à l'huile.

12. Amortisseur de choc hydraulique selon l'une quelconque des revendications 8 à 11, comprenant en outre un élément de retenue du joint (88) agencé entre une extrémité étendue de l'élément de guidage cylindrique (84) et l'élément de tige (41).

13. Amortisseur de choc hydraulique selon la revendication 12, dans lequel l'élément de retenue du joint (88) comprend une bague de graissage.

14. Amortisseur de choc hydraulique selon les revendications 12 ou 13, dans lequel l'élément de retenue du joint (88) est agencé au-dessus du niveau du fluide hydraulique dans la chambre de cylindre (46, 48).

15. Amortisseur de choc hydraulique selon l'une quelconque des revendications précédentes, comprenant en outre un réservoir secondaire (64), englobant :
un carter de corps principal (65) pour former une chambre à huile secondaire (69) communiquant avec la chambre de cylindre (46, 48) ; et
un piston libre (68) fixé dans le carter de corps principal (65).

16. Amortisseur de choc hydraulique selon l'une quelconque des revendications précédentes, comprenant en outre :
un tube interne (10);
un tube externe (9) recevant par ajustement le tube interne (10) en vue d'un déplacement coulissant libre ;
un piston (44) agencé dans la chambre de cylindre (46, 48) en vue d'un déplacement coulissant libre ; et
un élément de tige (41), dont une extrémité est fixée sur le tube externe (9), l'autre extrémité étant connectée au piston (44);
la chambre de cylindre (46, 48) étant formée dans le tube interne (10) et le tube externe (9), la chambre à huile de lubrification (49) étant également formée dans le tube interne (10) et le tube externe (9), et sur l'extérieur de la chambre de cylindre (46, 48).

17. Motocycle (1) comportant un amortisseur de choc hydraulique selon l'une quelconque des revendications précédentes.
